# EUROPEAN PATENT SPECIFICATION

(11) **EP 1 304 213 B1**
(45) Date of publication and mention of the grant of the patent: **17.05.2006**
(21) Application number: 02022308.7
(22) Date of filing: 05.11.1999
(51) Int. Cl.: B31B 19/90, B65D 33/24, B65B 9/20, B29C 65/00, A44B 18/00

(54) **Touch fasteners and their manufacture**
Haftverschlüsse und deren Herstellung
Fixations par contact et leur fabrication

(30) Priority: 06.11.1998 US 187389; 16.04.1999 US 293257; 14.10.1999 US 159489
(43) Date of publication of application: 23.04.2003
(62) Divisional of application: 99956952.8
(73) Proprietor: VELCRO INDUSTRIES B.V., Curacao (AN)
(72) Inventor: Clune, William, Concord, NH 03301 (US); Shepard, William H., Amherst, NH 03031 (US); Provost, George A., Litchfield, NH 03052 (US)
(74) Representative: Müller-Boré & Partner Patentanwälte

(56) References cited:
- EP-A- 0 808 585
- FR-A- 1 578 114
- GB-A- 2 184 997
- US-A- 4 955 981
- US-A- 5 032 122
- US-A- 5 088 164
- US-A- 5 172 980
- US-A- 5 461 845
- US-A- 5 601 368

## Description

### BACKGROUND OF THE INVENTION

This invention relates generally to touch fasteners, such as composite touch fasteners having both loops and loop-engageable fastener elements extending from one side of a common substrate, to their application in products such as closure strips for reclosable bags, and to methods and apparatus for their manufacture. This invention also relates to applying recloseable touch fasteners strips to sheet or film, especially to flexible, disposable sheet or film for packaging purposes, such as in vertical form and fill and horizontal form and fill packaging and in pouch manufacture.

There has been much development over the last thirty years in the field of hook-and-loop fasteners. Early touch fastener products of this type consisted of two mating tapes, each being knit or woven. One tape would include loops of filament woven into a base, and the other would include filaments woven to form loops and then cut to form hooks. In some cases free ends of drawn plastic filaments on the male tape would be melted to form protruding heads. This shape of fastener element is sometimes called a "mushroom", to distinguish it from "hook"-shaped elements with re-entrant crooks. In some cases, arrays of similar discrete fastening elements on two parts are shaped to engage with each other to form a releasable closure, these being known as "self-engageable" hooks or closures.

More recently, continuous molding of fastener elements extending from a common sheet-form resin base has resulted in less expensive and thinner male tapes. Significant improvements in this area include the development of continuous fastener tape molding using fixed mold cavities (see Fischer, U.S. Patent 4,794,028), and the ability to provide loops on the back side of the male fastener tape as the fastener tape substrate and elements are being formed (see Kennedy et al., U.S. Patent 5,260,015), thus creating a composite fastener tape capable of fastening to itself. Further improvements have reduced the size of the fastener elements moldable by such techniques, to heights of 0.015 inch (0.38 millimeter) or less, which provide a very smooth touch when arranged in dense arrays.

Another example of molded fastener tape involves molding perform stems or similar structures integral with a plastic backing substrate, and thereafter performing a forming operation to convert outer portions to a J hook, a mushroom head or similar engaging structure.

As molded fastener tape has been improved to be more flexible and less expensive, it has found application in disposable garments, such as diapers. Further improvements are desirable to extend the applicability of molded touch fastener products to other uses.

One such use that is discussed in more detail below is as a closure for reclosable bags and other such packaging.

Other types of repeated use closures for bags have included, for instance, rib-and-groove type of locking or zipper closures such as are marketed under the name ZIPLOC. These have very different fastening characteristics and exacting requirements for joining to sheet or film in comparison to the touch-fastener closures that are concerned here.

US 088 164 discloses a bag having a first fastener element and a second fastener element engageable with the first fastener element . The first and second fastener elements are arranged on opposing walls of the bag.

EP 0 808 585 discloses a method of bonding a reclosable fastener to a backing sheet by the use of a pressing roller having raised lands.

US 4 955 981 discloses a reclosable bage having hook and loop sealing strips disposed between a flap and a front piece.

It is the object of the invention to provide a method of forming a reclosable bag suitable to receive delicate items, such as snack chips, without damaging the contents.

This object is fulfilled by a method having the features disclosed in claim 1. Preferred embodiments are defined in the dependent claims.

According to one aspect of the invention, a continuous sheet-form product useful for forming bags includes a continuous sheet-form film and multiple lengths of closure strip extending transversely across the film at spaced intervals and permanently bonded to the film. Each length of closure strip includes two overlapping substrates, with each substrate bonded separately to the bag film on opposite sides of an associated frangible region of the film; a loop strip carried on the front face of the first substrate and comprising a discrete band of engageable loops extending along the length of the closure strip; and an array of loop-engageable fastener elements extending from the second substrate and forming a discrete band of fastener elements extending longitudinally along the length of the closure. The first and second substrates are overlapped as bonded to the film such that the bands of loops and fastener elements overlap for engagement.

Preferably, the fastener elements are integrally molded with resin of the front face of the second substrate.

In some cases, the loop strip comprises a non-woven web of fibers, preferably with a basis weight of less than about 4 ounces per square yard (136 grams per square meter).

In some embodiments, the loop strip has a width defined between two longitudinal edges thereof, with fibers of the loop strip being affixed to the substrate across the width of the loop strip. Preferably, fibers of the loop strip are encapsulated by resin of the substrate across the width of the loop strip.

According to another aspect of the invention, a method of fabricating reclosable bags in a vertical form and fill process is provided. The method includes the steps of:
a) unrolling a continuous length of sheet-form bag film and directing the unrolled film over a forming head, advancing the bag film one bag length between pauses;
b) during each pause, attaching a length of closure strip across the unrolled bag film upstream of the forming head, each length of closure strip comprising a sheet-form resin substrate having a front face; a loop strip carried on the front face of the substrate and forming a discrete band of engageable loops along the length of the closure strip; and an array of loop-engageable fastener elements integrally molded with the front face of the substrate and forming a discrete band of fastener elements extending longitudinally along the length of the closure strip and spaced apart from the band of loops; and
c) forming individual bags from the bag film, each bag having an associated length of closure strip.

According to yet another aspect of the invention, a method of forming a bag or package of disposable flexible packaging film or sheet having a surface of predetermined thermoplastic composition is provided. The method includes providing inter-engageable closure strip portions which are either separate strips or strip portions of a common member, and joining the backing of said strip portions to respective portions of the surface of said plastic film or sheet by welding. At least a first of the closure strip portions provides an array of discrete fastener elements such as hook elements having crooks or hook elements of mushroom form, the fastener elements having stems integrally molded with and extending from a thermoplastic backing substrate. The other of the strip portions provides an array of engageable elements such as loops or fibers, or elements self-engageable with fastener elements of the first strip portion, such that the elements of the strip portions are capable of forming a releasable closure. Each of the strip portions has a backing surface comprised substantially of the predetermined thermoplastic composition of which the surface of the film is formed.

In some cases, during welding, the fastener elements of the respective strip portions are inter-engaged and the backings of the strip portions are simultaneously joined to respective portions of the sheet or film by application of energy to the respective sheet or film portions, air space provided by the inter-engaged elements serving to prevent unwanted welding of the strip portions to each other.

According to further aspects of the invention, methods of applying a reclosable fastener to sheet or film are provided, which include the steps of providing inter-engageable closure strip portions which are either separate strips or strip portions of a common member and joining the backing of the strip portions to respective portions of the surface of the sheet or film by application of energy such as heat, acoustic or radio-frequency energy, to produce for instance welding or adhesive bonding. At least a first of the closure strip portions provides an array of discrete fastener elements such as hook elements having crooks or hook elements having mushroom form, the fastener elements having stems integrally molded with and extending from a thermoplastic backing substrate. The other of the strip portions provides an array of engageable elements such as hook-engageable loops or fibers, or elements self-engageable with fastener elements of the first strip portion, such that the discrete elements of the strip portions are capable of forming a releasable closure. In one aspect, during joining, the fastener elements of the respective strip portions are inter-engaged and the backings of the strip portions are simultaneously joined to respective portions of the sheet or film by application of energy to the respective sheet or film portions, with insulating air pockets provided in the space created by the inter-engaged elements serving to limit thermal transfer and unwanted adhesion or bonding of the closure portions to each other.

In another aspect, the cooperating parts of the releasable closure are of materials that are incompatible or of significantly different melting temperatures such that, under temperature conditions of joining, the interengaged elements do not tend to adhere to each other. Such provisions can avoid the need for presence of a release sheet during the joining action.

In one example, loops or fibers of the second strip portion are encapsulated by and secured by thermoplastic resin of the backing of the respective closure strip portion, the loops or fibers being comprised of resin, such as polyester, that is incompatible with or has a higher melting temperature than the resin such as polyolefin, of the respective backing substrate, and/or of components of the opposed first strip portion, such that, under conditions of joining, the dissimilarity of the material of the loops or fibers serves to prevent detrimental change to the loops or fibers or detrimental adhesion or bonding of the loops or fibers to the first closure strip portion, preferably, the mass of the hook elements of the first portion being substantially greater than that of the loop elements, the thermal mass of the hook elements being sufficient to prevent undue distortion of the hooks during the joining action.

In some cases, the method of the invention is advantageously performed during vertical form and fill packaging. In other cases the method advantageously is performed during horizontal form and fill packaging. The method is also employed to advantage during pouch making.

In such cases it is to be noted that the invention does not require the use of any particular resin for the various components. This permits the use of backing substrates of e.g. polypropylene, polyester and nylon for desired barrier qualities that polyethylene does not provide.

Also, in cases desired, a wide range of compatibility layers may be employed. For instance, for joining a polyester backing of a closure strip to a polyester sheet or film, a lower melting point layer on either component that adheres to each can be applied. In another case, or where the sheet is a plain or coated paper either a bonding layer may be introduced to one f the mating surfaces or the substance of the backing substrate itself may be used as the bonding surface, e.g. where the backing is polyethylene.

Preferably, the array of hook-engageable elements comprises a non-woven web of fibers.

In some cases, the backing substrates of said strip portions overlap and are welded to respective edges of said plastic film or sheet.

The longitudinal edges of the plastic film or sheet are brought together in some embodiments to form a fin seal with the strip portions disposed within the fin seal.

Preferably, the closure is a continuous, thin, strip-form extrusion of plastic material upon one face of which the fastener elements are either integrally molded of material of the extrusion or bonded to the extrusion while the extrusion is in a softened state, such that the fastener elements are joined directly to the extruded material, or are formed out of the extruded material, without separate adhesives or bonding agents.

In one preferred bag construction, the bag material forming the back face of the bag is permanently bonded to the back surface of the closure along one closure edge, and the bag material forming the front face of the bag is permanently bonded to the front face of the closure along its opposite edge, in an edge bonding zone free of fastener elements.

As a repeated use closure, the product provides a ventilated, easily alignable seal. As the bands of loops and fastener elements are relatively wide, there is no need for accurate alignment to form a reliable closure. The closure is able to accommodate a fair amount of dirt or debris without losing its function as a closure, making it particularly applicable as a closure for bags containing granular or powder substances. In addition, the natural porosity of the closure can provide some degree of filtering of airborne dust. Such a ventilated closure can be particularly desirable in cargo containers of airplanes in order to accommodate pressure changes, and, by its venting action, may help to avoid moisture buildup to keep produce and other such items fresh. The groove and rib tear strip molded into the center of the closure strip in some cases advantageously maintains an airtight seal until the bag is initially opened. The continuous closure strip is readily adaptable to standard bag-making equipment and, in many instances, is directly weldable to compatible bag materials. These advantages accrue to bags produced according to the invention and having such a repeated use closure.

By employing a very light, non-woven loop material and integrally molded fastener elements in several instances, the resulting product is relatively inexpensive and flexible.

Other features and advantages will be apparent from the following detailed description and attached drawings, and from the disclosures of our earlier U.S. patent applications, and from the claims.

### BRIEF DESCRIPTION OF THE DRAWINGS

Fig. 1 is a perspective view of a composite touch fastener in the form of a closure strip.
Fig. 1A is an enlarged view of area 1A in Fig. 1.
Fig. 2 is a cross-sectional view of the closure strip, folded and installed at the opening of a bag in a sealed condition.
Figs. 3A and 3B illustrate a bag with the closure strip of Fig. 1, in sealed and opened conditions, respectively.
Fig. 4 illustrates a first method and apparatus for forming composite touch fastener tapes, such as the closure strip of Fig. 1.
Fig. 5 illustrates a second vertical form/fill bagging apparatus, configured to accommodate the closure strip.
Fig. 5A is an enlarged view of the means for joining the closure strip to the bag web in Fig. 5, with portions removed to show the configuration of the insulator rail and sealing jaws.
Fig. 6 is a cross-sectional view, taken along line 6-6 in Fig. 5.
Fig. 6A is a cross-sectional view, corresponding to Fig. 6, with an inverted closure strip arrangement.
Fig. 7 shows a first inverted horizontal form/fill packaging apparatus and method, with the closure strip fed into the fin seal between the web flanges.
Fig. 7A is a cross-sectional view, taken along line 7A-7A of Fig. 7.
Fig. 8 shows a second inverted horizontal form/fill packaging configuration, with the closure strip wrapped about the web flanges.
Fig. 8A is a cross-sectional view, taken along line 8A-8A of Fig. 8.
Fig. 9 shows a third horizontal form/fill packaging method, with the fin seal formed on the underside of the packages.
Fig. 10 shows an apparatus and method for forming bags to be filled from an open end opposite their closures.
Fig. 11 is a cross-sectional view, taken along line 11-11 in Fig. 10.
Fig. 12 is an enlarged view of area 12 in Fig. 10, showing the configuration of the closure as applied to the web.
Fig. 13 shows one configuration of an edge seal formed between two adjacent bags in the process of Fig. 10, for forming exposed closure pull tabs.
Fig. 14 illustrates opening a bag with an exposed closure pull tab, such as formed from the edge seal configuration of Fig. 13.
Fig. 15 shows another method for forming pouches, in which the closure strip is bonded to the edges of a sheet of bag film as the film is folded.
Fig. 16 illustrates making recloseable bags from two parallel plastic webs and a closure strip.
Fig. 16A shows a bag made by the process of Fig. 16.
Fig. 17 is a cross-section through a bag having a closure strip with exposed loop-engageable elements extending from an outer bag surface.
Fig. 18 is a cross-sectional view through the closure end of a bag with an inverted closure.
Fig. 19 illustrates a method and device for attaching the closure strip to the bag of Fig. 18.
Figs. 20A-20C show rolled bag films with pre-applied closures, in various configurations.
Fig. 21 is a perspective view of a reclosable bag.
Fig. 22 illustrates the bag of Fig. 21 being opened by pinching and pulling.
Fig. 23A is a cross-sectional view of the closure end of the bag, taken along line 23A-23A in Fig. 21.
Fig. 23B shows the bag cross-section of Fig. 23A with the bag initially opened and then folded about the opening to engage the fastener elements of the closure.
Fig. 24 illustrates a third vertical form/fill bagging apparatus and method, in which the closure strip is applied to the bag film before the film is wrapped about the forming head.
Fig. 25A is a cross-sectional view, taken along line 25A-25A in Fig. 24.
Fig. 25B is taken from the same perspective as Fig. 25A, with a different closure strip configuration.
Figs. 26A and 26B show closure strips with peelable seals.
Fig. 27 shows a hook-to-hook engagement between facing bands of oppositely-directed, hook-shaped fastener elements.
Fig. 28 is a cross-sectional view, taken along line 28-28 in Fig. 27.

### DESCRIPTION OF EMBODIMENTS

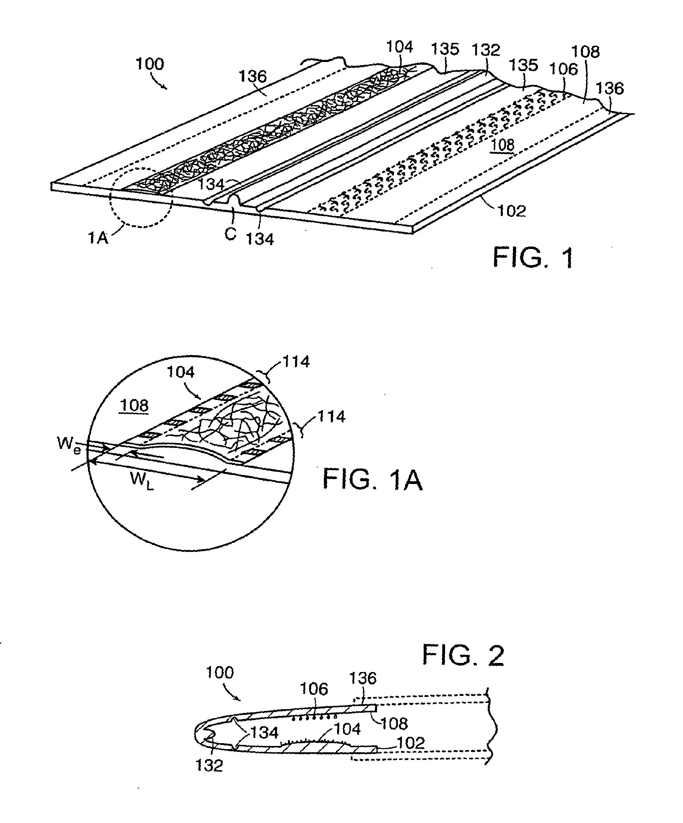

Referring to Fig. 1, a lengthwise-continuous closure strip 100, such as for sealing a bag, consists of a thin, sheet-form resin substrate 102 with lengthwise-continuous, parallel bands 104 and 106 of loops and fastener elements, respectively, on its front face 108. Bands 104 and 106 are equally spaced from the center "C" of the closure strip, such that when the strip is folded longitudinally at "C" to cover front face 108, the fastener elements of band 106 engage and retain the loops of band 104 to form a releasable fastening. The fastener elements 110 of band 106 are integrally molded with and extend from front face 108. In this embodiment, these fastener elements are in the form of J-hooks that extend, in rows, along the length of the closure strip. Some of the J-hooks face in opposite directions along the strip. Other fastener element shapes may also be employed, including those that overhang the substrate 102 in a widthwise direction. A suitable fastener element shape is the CFM29 hook shape (of about 0.015 inch or 0.38 mm in height), available in various products sold by Velcro USA in Manchester, New Hampshire.

Band 104 of loops consists of a preformed, non-woven web of polymer fibers, which may include a stabilizing binder, and which are bonded to front face 108 of substrate 102 at various points across the width and length of the web. Suitable loop materials include those disclosed in U.S. Patent application 08/922,292, and in the related PCT patent application PCT/US98/18401.

Preferably, the non-woven loop material in band 104 is very thin, such as less than about 0.040 inch or 1.0 mm thick (more preferably, less than about 0.020 inch or 0.5 mm thick), with web fibers held in a transversely stretched condition and freestanding loop structures extending from its exposed surface. As discussed in the above-referenced patent applications, the loop structures extend from associated knots in the stretched web, which may be stabilized by liquid binder wicked into the knots and cured. Between knots, the thin fiber mat is not very dense and is sheer enough to permit images to be readily seen through it. Overall, the loop material has a basis weight (in its preformed state, including any pre-applied binder) of less than about 4 ounces per square yard (136 grams per square meter), preferably less than about 2 ounces per square yard (68 grams per square meter). Other details of this loop material may be found in the above-referenced applications. For applications in which the loop material is partially penetrated by resin of the substrate as the substrate is formed (as discussed below), the needled loop material is preferably only stretched in a transverse direction only about 22 percent to leave a fair amount of loft and avoid total penetration.

In some instances, loop material 104 is partially encapsulated directly in resin of the substrate as the substrate is formed in a continuous molding process (described below). In other cases, it is bonded to the formed substrate, either by ultrasonic bonding, welding, or adhesives.

Some lightweight knits are also suitable loop materials for certain applications. Examples of such knits are Product 19902 from Guilford Knits in Greenville, South Carolina, which is of polyester fibers and has a basis weight of only about 1.6 ounces per square yard (54 grams per square meter). For a heavier knit, we prefer Guilford's Product 19029, a nylon knit of about 3.3 ounces per square yard (112 grams per square meter. Lightweight knit products are also available from TYBOR in Spain, and MIZARD in Italy.

As an alternative to feeding a preformed sheet of loop material into a forming nip to create the loop band 104 of the closure strip, engageable loops may be formed subsequent to forming the base of the closure strip by stitching loops directly into the base (as in a MALAMO process), or by bonding a strip of loop material to the face of the closure strip.

Referring back to Fig. 1, molded into the front face 108 of substrate 102 along its center is a hump-shaped longitudinal rib 132 between a pair of grooves 134 molded into front face 108. One example of this rib 132 has a height of about 1/32 inch (0.8 mm) and a width of about 1/32 inch (0.8 mm) at its base. The rib may have a hump-shaped profile, as shown, or a rectangular cross-section with parallel sides. The rib is preferably longitudinally continuous, as shown, but may alternatively be formed as a row of appropriately shaped protrusions. At least one of the flat regions 135 between grooves 134 and the loop and hook bands 104 and 106 in Fig. 1 contains, in some cases, a layer of adhesive such as a pressure sensitive adhesive (not shown), for providing a reclosable seal for applications where a resealable opening is desired. In these instances surfaces 135 provide an airtight, non-ventilated seal when the bag is closed, and supplement the mechanical closure strength of the hook and loop fasteners. Preferably, an adhesive is employed which has been compounded so that it sticks primarily only to itself or to the opposing face of the substrate, so as to not pick up excessive debris from the bag contents. In other, non-illustrated embodiments, either grooves 134 or rib 132, or both, are formed on the back face of the substrate, opposite the fastener elements and loop material.

The formed closure strip 100 is permanently installed at the openable end of a bag by attaching edge regions 136 of the closure strip to outer edges of the bag at its opening, with the loop and hook bands facing each other, as shown in Fig. 2. The bag may be attached to the back face of the closure strip as shown, in which case edge regions 136 are defined on the back face of the closure strip, or on the front face, with the edges of the bag on the inside. Methods of attaching the closure strip to the bag include, but are not limited to, welding, gluing, adhering or stitching. One preferable method of attaching a closure strip to a bag of a compatible resin is by directly welding the resin of the closure substrate to the resin of the bag, as discussed below. In this manner, polyethylene closure strips may be readily welded to polyethylene bags.

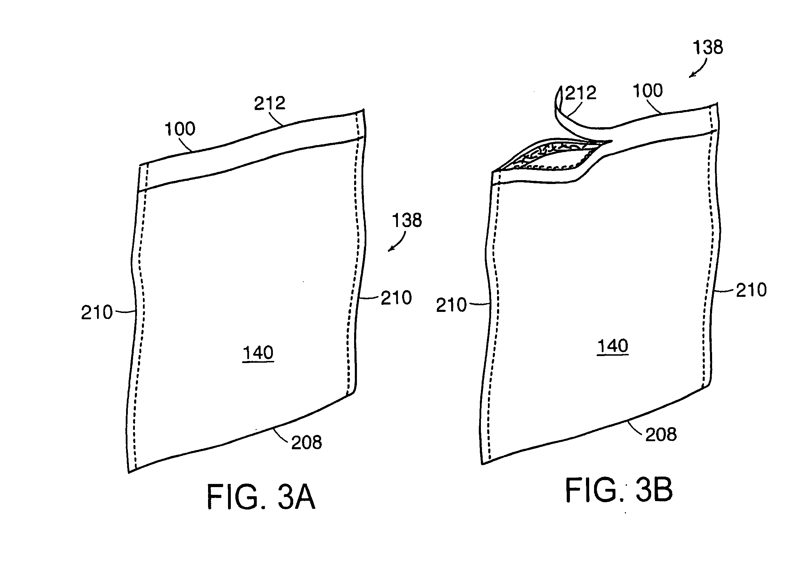

Fig. 3A illustrates a sealed bag 138 having a polyethylene body 140 welded to closure strip 100 across its openable end. Preferably, the thickness of the substrate of the closure strip is about the same as the thickness of the material of the bag body, in the range of 0.002 to 0.005 inch (0.05 to 0.13 millimeter). Substrates of up to at least 0.015 inch (0.38 millimeter) in thickness, however, may be produced by the methods described below. To initially break the seal and open the bag, the outer fold of closure strip 100 is grasped and pulled, thereby tearing the folded edge from the bag from one end of the bag to the other, as shown in Fig. 3B. In grasping the outer fold of the closure strip, the middle rib 132 is grasped between the thumb and forefinger. Rib 132 thus provides an edge of increased thickness for easy grasping. As the folded edge of the closure strip is torn away, the closure strip tears along grooves 134. Grooves 134 function as frangible tear points for initially opening the associated bag, and may be straddled by an associated local thickening of the substrate, such as in the form of ribs or rows of raised bumps (not shown) to direct the propagation of the tear along the grooves.

Preferably, the resin of the substrate of the closure strip is compatible with the resin of the bag body, to enable direct welding of the two together. In situations where this is not practical, a separate layer of a bag-compatible material may be provided on the closure strip. For example, a layer of paper 142 may be bonded to either the front face of the closure strip (e.g., in edge regions 136 in Fig. 1), or across the back face of the closure strip, or along just the edges of the back face of the closure strip. The paper 142 may be directly bonded to the resin of the substrate (e.g., during the forming of the substrate, as described below), or joined with adhesive after the substrate is formed.

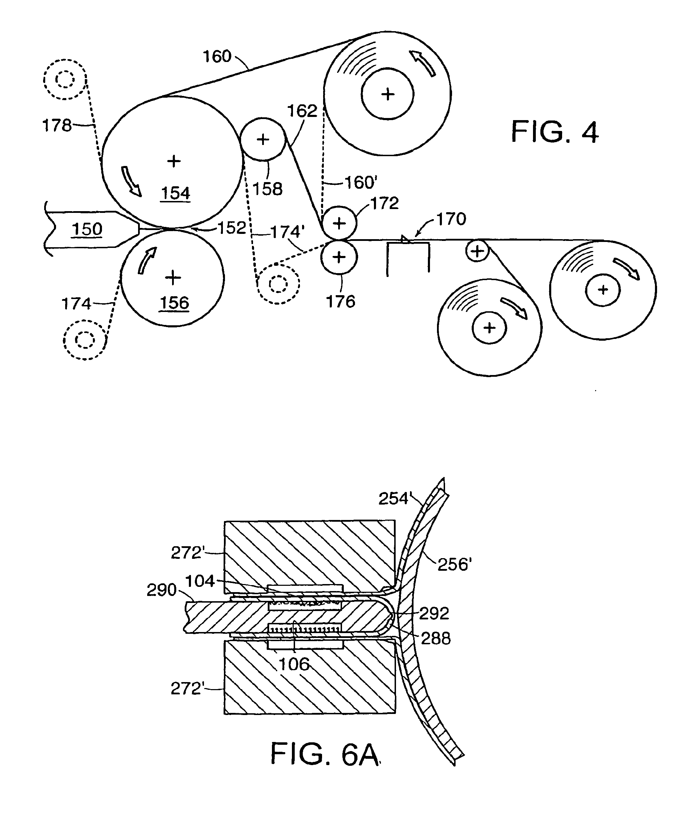

Fig. 4 illustrates one method and apparatus for producing the above-described closure strips. The method builds upon the continuous extrusion/roll-forming method for molding fastener elements on an integral, sheet-form base described by Fischer in U.S. Patent 4,794,028, and the nip lamination process described by Kennedy, et al. in U.S. Patent 5,260,015. The relative position and size of the rolls and other components is not to scale. An extrusion head 150 supplies a continuous sheet of molten resin to a nip 152 between a rotating mold roll 154 and a counter-rotating pressure roll 156. Mold roll 154 contains an array of miniature, fastener element-shaped mold cavities extending inward from its periphery (not shown) for molding the fastener elements. Pressure in nip 152 forces resin into the fastener element cavities and forms the substrate. The formed product is cooled on the mold roll until the solidified fastener elements (e.g., hooks) are stripped from their fixed cavities by a stripper roll 158. Along with the molten resin, a continuous strip of loop material 160 (which becomes loop band 104 in Fig. 1) is fed into nip 152, where it is partially impregnated by resin and becomes permanently bonded to the front face of the substrate. Thus the product 162 that is stripped from the mold roll includes both fastener elements and loops.

Fig. 4 also indicates several variations of the above-described method. For instance, rather than introduce the loop material 160 through nip 152 and thereby join it to the substrate as the substrate is molded, the loop material may be joined to the substrate after the substrate has been formed, such as is indicated by the run 160' of loop material shown in dashed outline. In this case, front face idler 172 is heated and has a contoured surface for producing the desired pattern of bonding between the loop material and the substrate. Paper may be joined to the back face of the substrate, by either running a strip 174 of paper through nip 152 on the pressure roll side of the resin, or by adhering adhesive-coated paper 174' to the formed substrate either at stripping roll 158 or at idler 176. In some cases, adhesive-coated paper 174' includes a transfer coating, such that its paper backing may be peeled from the adhesive on the back of the product to secure the back of the final product to a supporting surface. The adhesive applied to the back of the product in this manner may be either a pressure-sensitive or heat-activated adhesive, for instance. For decreasing the permeability of the final product, a second flow of resin (either molten or in the form of a film) may be added to the nip against pressure roll 156, as strip 174 is shown, to form a backing on the final product. For instance, a layer of polyester may be added to reduce the permeability of a polyethylene closure strip, such as for packaging certain foods. Adding a strip of barrier material 178 between the loop material and the molten resin optionally controls the pattern of penetration of resin into the loop material in nip 152. Barrier material 178 is, in some instances, a perforated paper or film that allows resin to pass into the loop material in selected regions but inhibits its flow into other regions. The barrier material may also be a homogeneous sheet of material having a high porosity, equally limiting the penetration of resin into the loop material across the width of the barrier material. Rather than be introduced as a separate sheet, in some cases the barrier material is pre-applied to the surface of loop material 160 and may be in the form of a binder located in discrete areas of the loop material and locally encapsulating fibers of the loop material, for instance. In many cases, the barrier material is narrower than the loop material, and centered along the width of the loop material, to enable full penetration of resin into the edges of the loop material. In some cases, however, thin strips of barrier material are run into the nip along the edges of the loop material to inhibit the bonding of the edge regions to the substrate. Other arrangements of barrier and loop materials, and resulting bonding patterns, will be apparent upon reading this disclosure. In all cases in which the barrier material becomes permanently bonded to the substrate and therefore becomes an integral part of the final product, it should be selected for its low material cost and weight.

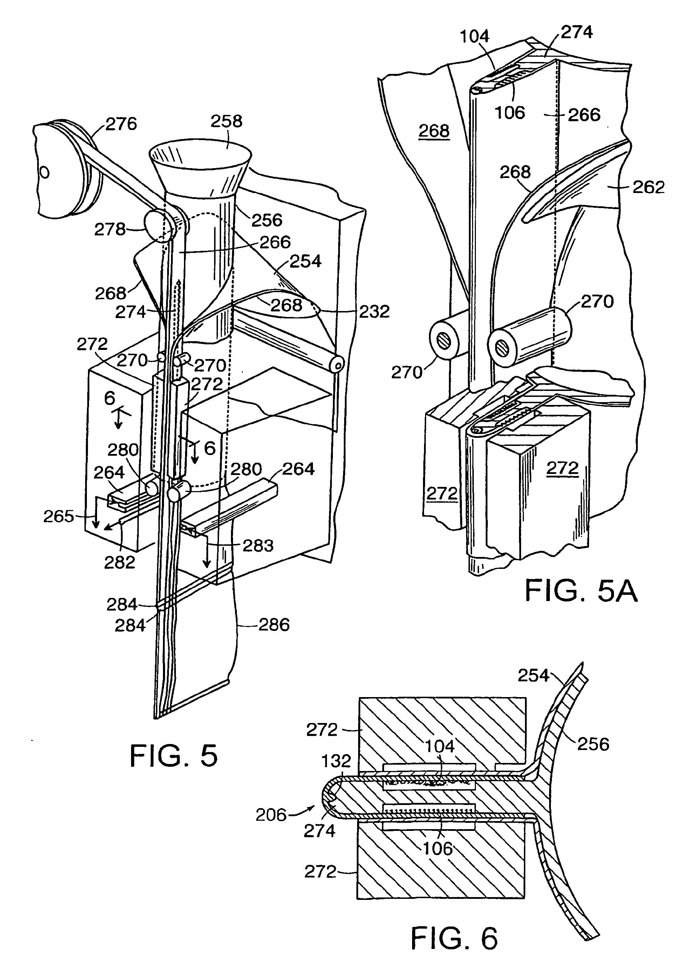

Fig. 5 illustrates a modification to a common VFF machine configuration, for continuously securing the above-described closure strip to a flow of bag-forming web during the forming and filling of individual bags. The bag-forming web consists of a thin sheet of thermoplastic film 254 which is shaped into a tube by being fed over a filling tube 256, which has an upper funnel end 258 through which contents are discharged to fall into individual bags formed of the film. Film 254 is fed from a roll (not shown) over an attitude roller, and guided onto the fill tube by curved guide forms 262. In some cases, the film is advanced continuously and the transverse sealing jaws 264 (described below) reciprocate vertically, traveling with the film during the sealing/cutting process (as indicated by arrows 265); in other cases the film is advanced incrementally and the transverse jaws remain within the same horizontal plane.

As film 254 is formed into a tube, its two longitudinal edges 268 form flanges extending generally radially from the tube, between which a continuous length of closure strip 266 is fed in a folded condition, such that the edge regions of the web film lie at least partially against the outer sides of the closure strip in face-to-face relation, but do not overlap the folded edge of the closure strip. Guide rollers 270 above the closure sealing bars 272 maintain the adjacency of the sides of the closure strip and the film edges. Closure strip 266 is fed over a contoured insulating rail 274 extending longitudinally along the fill tube from above guide rollers 270 to below closure sealing bars 272. As shown in Figs. 5A and 6, insulating rail 274 has a longitudinal groove along each of its sides. One groove accommodates the loop material 104 so as to avoid crushing the extended engageable loops, and the other groove receives the hooks 106 of the closure strip, helping to guide the closure strip through the sealing process. Rail 274 also has a notch extending along its distal end, for accommodating the middle grasp rib 132 of the closure strip. The primary purpose of insulating rail 274 is to inhibit undesired welding of the inner sides of the closure strip together as the edges of the bag film are welded to the outer surfaces of the closure strip by closure sealing bars 272 (see Fig. 6). When not employing an insulating rail, the closure strip may be configured to utilize the insulating properties of the loop material to avoid permanent welding together of the inner surfaces of the closure strip, as discussed more fully below.

Closure strip 266 may either be spooled from roll 276 over guide roll 278 in a folded condition, as shown, with its hooks and loops engaged and then pulled over insulating rail 274, thus separating the hook and loop sections of the closure strip, or the closure strip may be spooled flat and then folded about the insulating rail, thereby avoiding having to disengage the hook and loop sections in the process.

Closure sealing jaws 272 each have a longitudinal groove adjacent the longitudinal grooves of insulating rail 274, such that the heated sealing jaws slidingly contact the film edge regions only on either side of the hook and loop bands of the closure strip, sealing the film to the closure strip in two discrete bands on each side of the closure strip. Sealing jaws 272 have appropriate heating elements embedded within them (not shown) to maintain the sealing surfaces at a predetermined, elevated temperature. To leave the inner edge of the loop side of the closure strip free from the film to form an anti-peel flap, the sealing jaw 272 on the loop side of the closure is at least partially recessed, as shown, to avoid bonding the inner edge of the loop side of the closure strip to the bag film. To form an even wider anti-peel flap, the sealing jaw 272 on the loop side of the closure may be configured to contact the bag film only outboard of the band of loop material 104.

Immediately below the lower edges of sealing jaws 272, insulating rail 274 terminates and the hook and loop bands of the closure strip are pressed together between a pair of rollers 280, just above the lower end of fill tube 256.

After a selected amount of contents have discharged through the lower end of the fill tube, transverse sealing jaws 264 corrie together about the bag film and closure strip and form two parallel, transverse seals 284, each of which will form the sealed edge of a bag. As jaws 264 travel with the advancing film, a cutting knife 282 within the jaws severs the film and closure strip between the transverse seals 284. When jaws 264 open at the end of the sealing cycle, a fully formed, filled and severed bag 286 is complete.

Fig. 6A shows another configuration of sealing a closure strip 288 to edge regions of a film web 254 as the film web is fed about a fill tube 256, for creating what we call an inverted closure having free outer edges and a recessed center portion. In this configuration the closure strip is guided over a separate insulating rail 290 that extends between the film edges and the opposing sides of the closure strip, similar in cross-section to the insulating rail of Fig. 6 but in opposite orientation. In this case closure strip 288 is provided with a center tear notch 292, rather than a center rib, along which the closure is burst to initially open the bag. In the bag formed with this style closure, the hook and loop elements are not exposed to the bag contents prior to the initial opening, and the center portion of the closure strip provides a tamper-evident seal. Closure strip 288 is permanently sealed to the bag film by heated sealing jaws 272' which are similar in construction to sealing jaws 272 of Fig. 6.

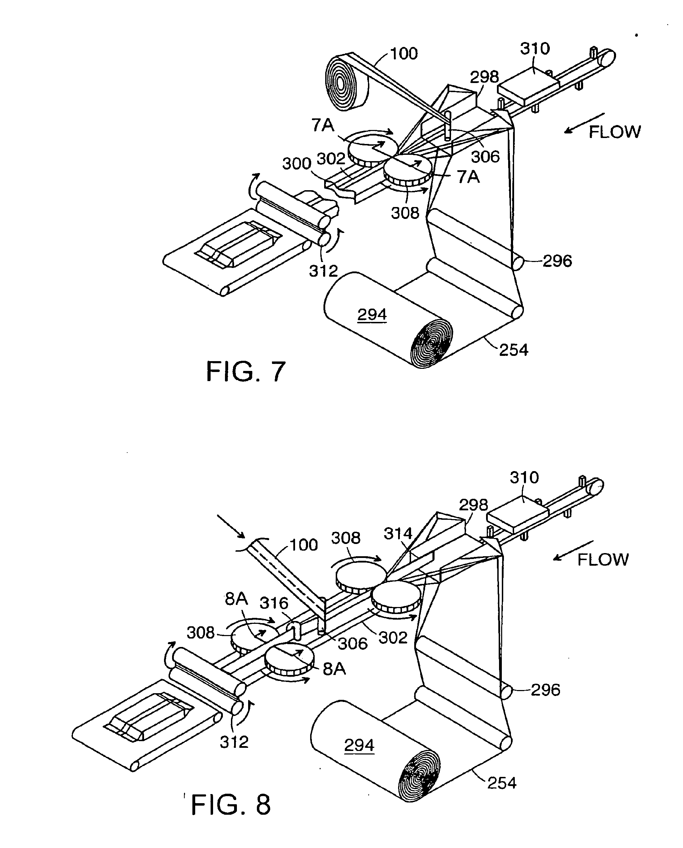

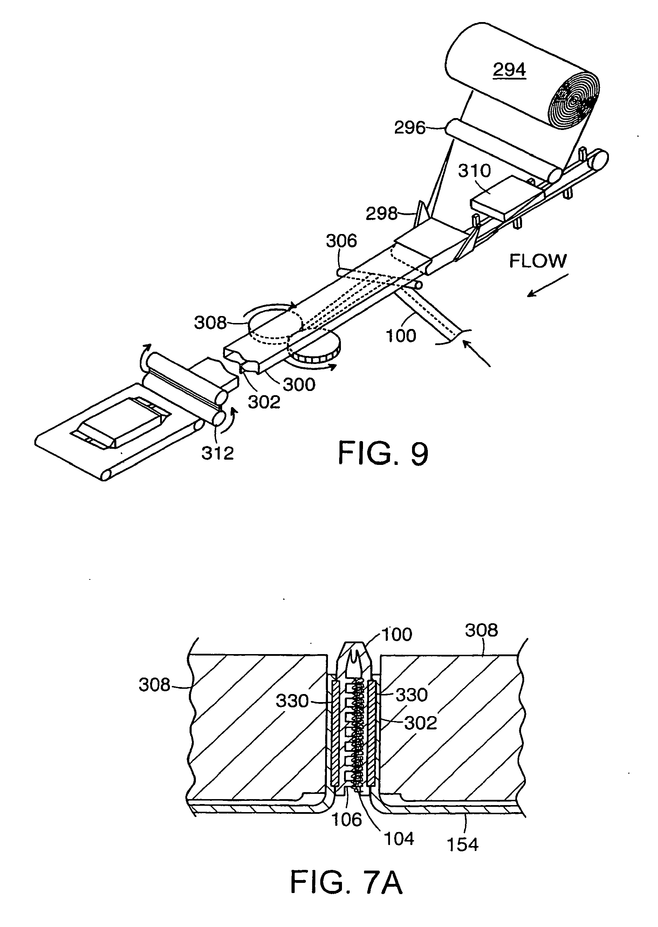

Figs. 7-9 illustrate three examples of horizontal form/fill (HFF) machines and processes featuring the above-described closure strips. Referring first to Fig. 7, a bag film 254 is continuously fed from roll 294 over attitude roller 296 and into a forming head 298 shaped to form the film into a rectangular tube 300. As with the VFF method described above, the edges of the film are brought together to form a perpendicular fin 302 extending from one side of the tube. In this case, closure strip 100 is fed from roll 304, folded to engage the hook and loop bands, passed about angled roller 306, and fed into the nip between heated fin seal rollers 308 between the edges of the bag film. Meanwhile individual products 310 to be packaged (e.g., trays of cookies) are fed through the forming head and into film tube 300 at a predetermined spacing and rate corresponding to the speed of the bag film.

As shown in Fig. 7A, the outer surfaces of folded closure strip 100 are permanently welded to the extending film flanges forming the perpendicular fin 302 of the film tube in the nip between fin seal rollers 308. No insulating rail is needed between the inner surfaces of the closure strip in this case because the air between the hooks and loops extending from the inner surfaces of the closure strip prevents extensive welding inside the closure strip. With proper adjustment of the temperature and pressure of rollers 308, which depends on the type of resin employed and the line speed, among other things, at most only a small fraction of the heads of hook elements in hook band 106 will be lightly bonded to either loop material 104 or the resin in which the loop material is embedded. This small amount of bonding will advantageously increase the amount of peel force required to initially open the package, leaving a sufficient proportion of undamaged hook elements to provide adequate engagement upon reclosure. We note that with many hook and loop resins, speeds, temperatures and pressures will have to be carefully adjusted and controlled to provide a light bond while avoiding rapid progression of hook melting.

Referring back to Fig. 7, diagonal offset folding rollers (not shown) fold over the fm seal, and a pair of offset rollers 312 carrying a heated seal bar and cutting blade seal the ends of the bags and sever the bags from each other.

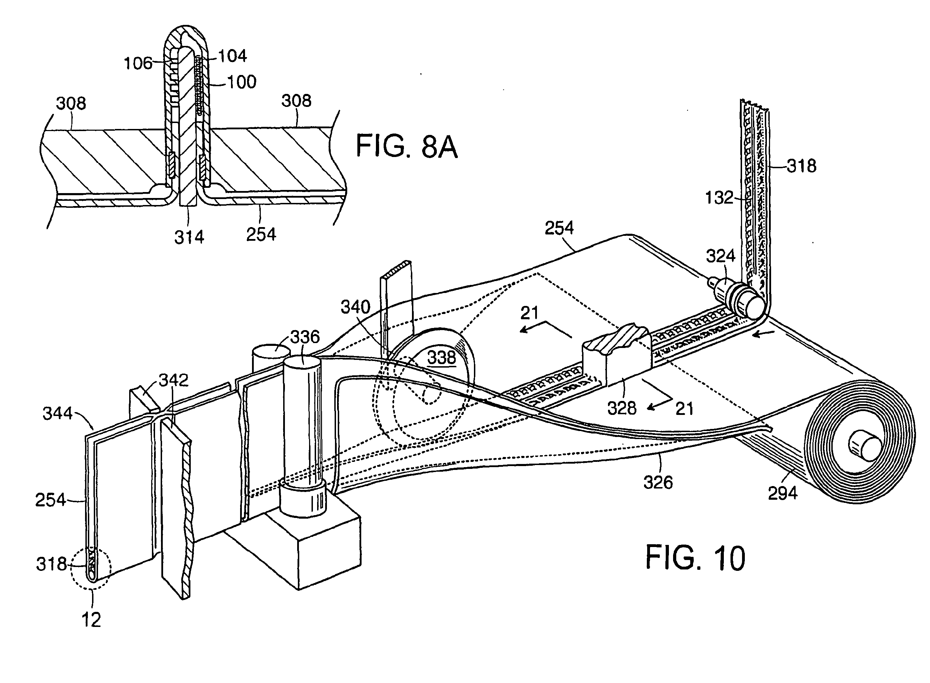

Fig. 8 shows a similar HFF process, in which the closure strip 100 is folded over on the outside of both the bag film flanges and a fin seal insulating rail 314 that extends to just downstream of heated fin sealing rollers 308. Passed around angled roller 306, closure strip 100 is folded within a guide channel 316 such that the edges of the closure strip overlap the edges of the bag film, as shown in Fig. 8A. These overlapped regions are welded together on either side of insulating rail 314 by the fin sealing rollers, permanently bonding the closure strip to the bag film. As the fin seal is folded over before passing between offset rollers 312, the hook and loop bands of the closure strip are pressed together, before the inner surfaces of the bag film flanges are welded together at the end seals of the bag. The hook and loop bands may also be welded together at the end seals, if desired, by providing sufficient heat, pressure and dwell time of the portion of the heated sealing bar of the offset rollers that contacts the closure strip at the hook/loop interface.

Fig. 9 illustrates the incorporation of a reclosable closure strip into a more common HFF machine configuration, with the longitudinal fin seal 302 formed on the bottom side of the rectangular film tube 300. As in Fig. 8, closure strip 100 is folded about the outside of the extended film edge flanges, which are separated by an insulating rail (not shown) that extends through the nip between the fin sealing rollers 308.

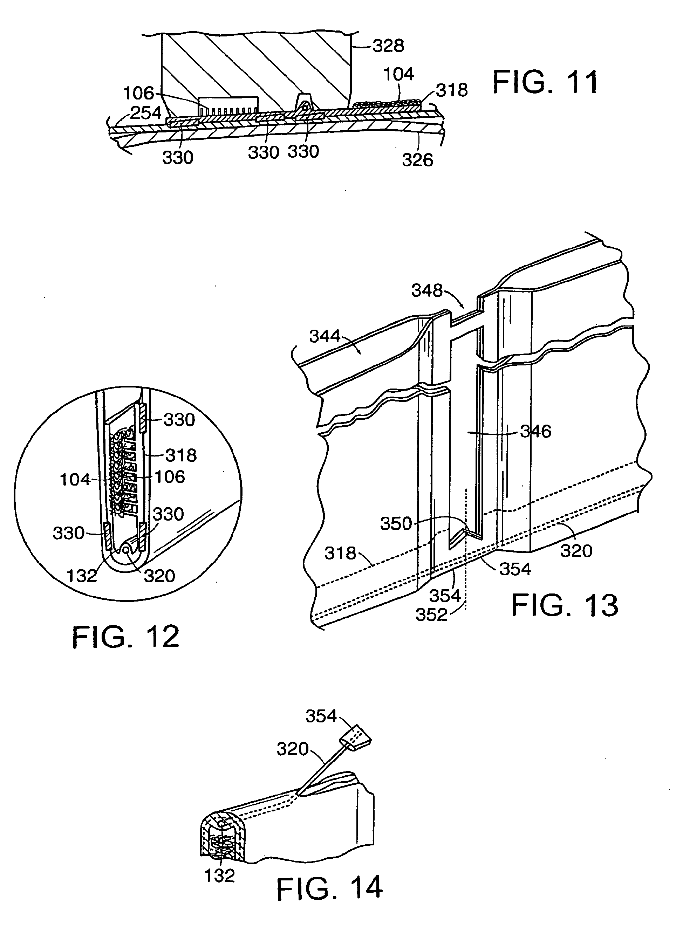

Fig. 10 shows another application of our closure strip in a bag-making process. Closure strip 318 differs from the closure strip shown in Fig. 1 only in that it contains a pull cord 320 (Fig. 12) embedded along its central rib 132. The pull cord is configured to tear through the closure strip and bag film longitudinally between the hook and loop bands when pulled transverse to the closure strip, and therefore must be of sufficient tensile strength to tear through the closure strip resin without breaking. Suitable pull cord materials include drawn nylons, such as fishing line, for example. The pull cord is embedded within the resin of the center closure strip rib by being continuously fed into a rib-forming channel of the mold roll prior to the introduction of the rib-forming resin (such as along the feed path labeled 178 in Fig. 4). Appropriate guides (not shown) are recommended to keep the pull cord from walking out of the rib-forming channel.

Closure strip 318 is passed around a guide roller 324 to travel with bag film 254 onto a folding collar 326 where it is permanently bonded to the film under heat and pressure by a sealing shoe 328. As shown in Fig. 11, sealing shoe 328 slidingly engages the closure strip along three bands, forming three continuous welds 330 between the closure strip and bag film 254. Collar 326 supports the bag film against the light pressure applied by the sealing shoe. The channels 332 and 334 in the sealing shoe accommodate the hook band 106 and center rib 132 of the closure strip, accordingly, and maintain the transverse location of the closure strip during bonding. The outer edge of the loop side of the closure strip is not welded to the bag film in this instance, to provide an internal anti-peel flap in the finished bag, as shown in Fig. 12. Other bonding configurations are employed for various applications.

Once welded together, bag film 254 and closure strip 318 are folded along their longitudinal centerline and passed between two drive rollers 336 that press the hook and loop bands of the closure strip together and ensure an appropriate crease along the spine of the closure strip. The folding of the bag film and closure strip is effected by collar 326 and a creasing idler 338 that runs along the center of the closure strip and defines a rim groove 340 for receiving the center rib of the closure strip during folding.

The folded bag film next passes between a pair of reciprocating sealing/cutting jaws 342 which close against the outer surfaces of the bag film to seal the two sides of the folded bag film and the folded closure strip together to form a series of individual pouches, each pouch sealed on three sides and having a single open end 344 for subsequent filling. Jaws 342 may be configured to also sever the pouches from each other during sealing, or to leave the pouches connected in the form of a string of pouches that is readily pulled through an adjacent filling/closing station (not shown).

Fig. 13 gives one example of a pouch side seal configuration formed by the jaws 342 of Fig. 10, in which a slot 346 and notch 348 are die-cut within the vertical seal formed between adjacent pouches. The heated faces of jaws 342 form complementary die parts for cutting through the bag film and closure strip to form the configuration shown as the inter-pouch seal is formed. The pouches are then filled through their open ends, which are subsequently sealed closed. By severing the lower segments 350 joining adjacent pouches along centerlines 352, extended pull tabs 354 are formed at the edges of each pouch. Each pull tab 354 contains an end portion of pull cord 320, and provides convenient means for grasping and pulling the pull cord through the closure strip along the pouch, as shown in Fig. 14.

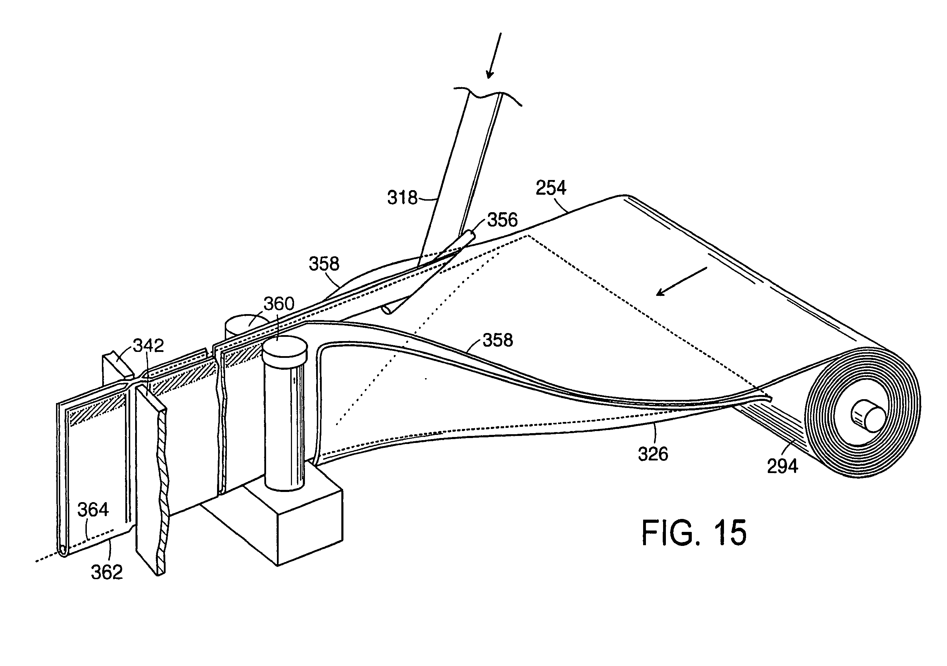

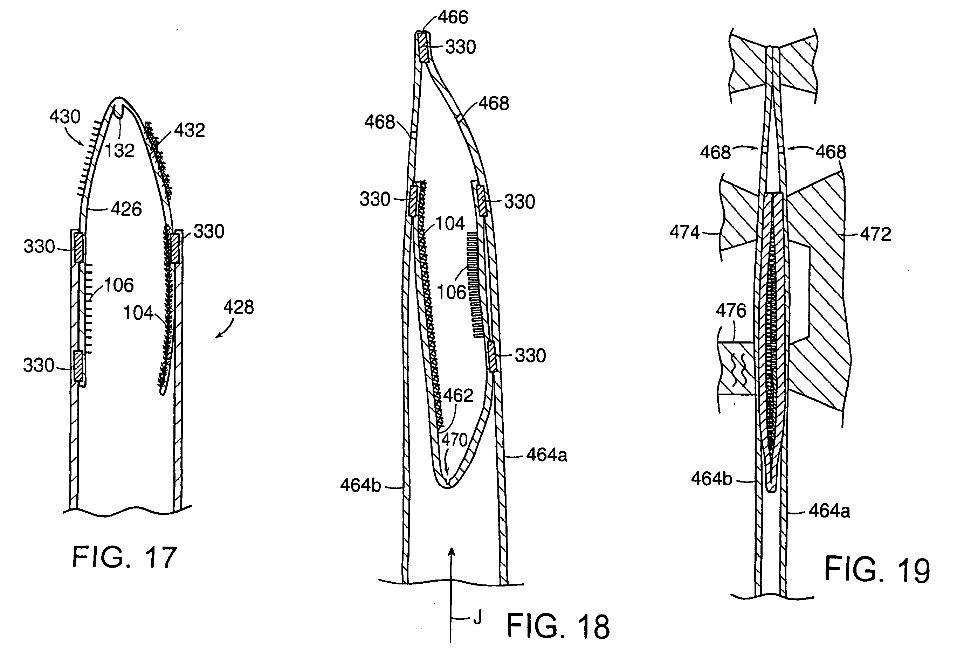

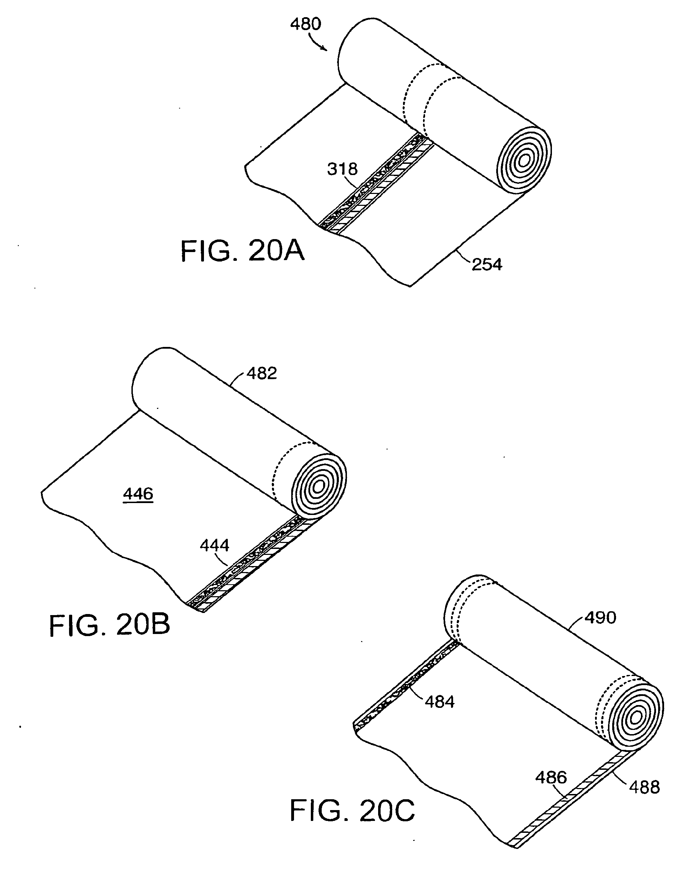

In the bag-forming method shown in Fig. 15, closure strip 318, already folded in half, is fed across an angled roller 356 and between the longitudinal edges 358 of bag film 254 as the film is folded within collar 326. A pair of heated sealing rollers 360 continuously seals the edge regions of the bag film to the overlapping closure strip. No insulating rail is necessary as the loop material of the closure strip, which in this case is sufficiently wide to extend across the entire sealing region, inhibits the bonding of the opposing inner surfaces of the closure strip (as discussed further below with respect to Figs. 18 and 19). After passing through edge sealing jaws 342, the folded edge 362 of the bag film is trimmed away along line 364, leaving the ends of the pouches opposite the closure strip open for receiving materials to be packaged. The series of pouches may then be spooled into a roll for sale or later filling.

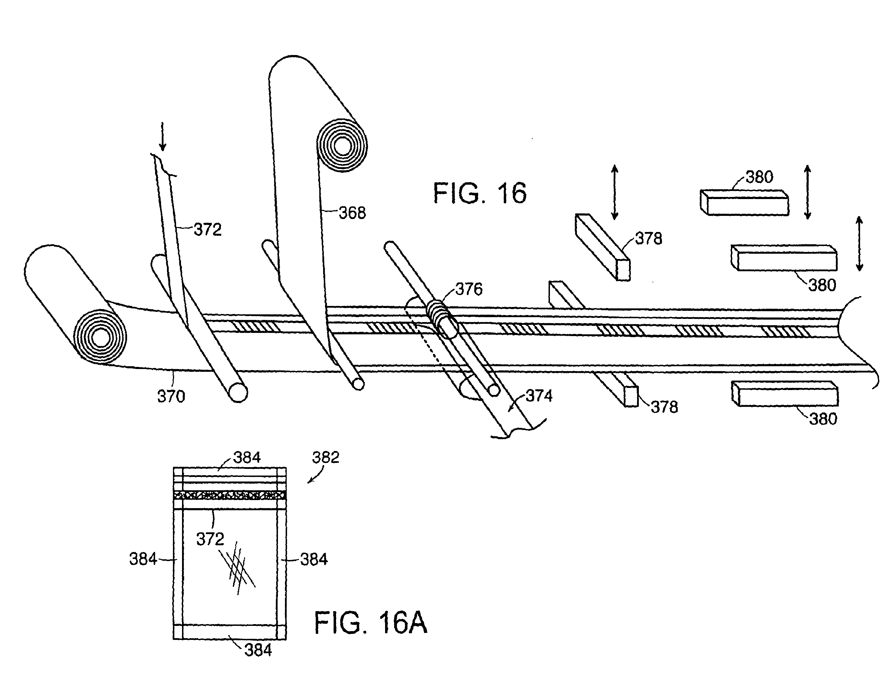

Fig. 16 shows a method of making bags from two separate sheets of bag film and the above-described bag closure strip. Upper and lower plastic films 368 and 370, respectively, are unspooled continuously, with either a pre-folded closure strip, or pre-engaged hook and loop strips 372, fed between them as shown. An insulating rail 374 extends between the hook and loop strips, temporarily disengaging the hooks from the loops, as the hook and loop strips are each permanently welded to respective inner sides of the plastic films between two rotary sealing rolls 376 (only the upper roll is shown). The parallel films and fastener strips are then welded together at spaced intervals by transverse heated sealing jaws 378, forming side seals between adjacent bags which are then filled from their open ends (not shown) and closed by upper and lower sets of sealing jaws 380. This process is also useful, for instance, for forming a series of pre-made bags to be rolled or stacked for later filling.

The bag 382 formed by this process has four side seals 384, as shown in Fig. 16A, along with closure 372. The side seal 384 adjacent and parallel to closure 372 is ripped off to open the bag and expose the closure. In another embodiment (not shown) the side seal 384 adjacent and parallel to closure 372 is omitted, along with the upper set of sealing jaws 380 in Fig. 16, and a folded closure strip (e.g., strip 318 of Fig. 15) is inserted in place of separate strips 372, with the fold of the closure strip pointing outward toward the adjacent side of the continuous films. In another embodiment, producing an "inverted" closure arrangement similar to that shown in Fig. 18, the folded closure strip is fed between the plastic films with its fold extending away from the adjacent edge of the films.

Thickened weld zones may be provided near the edges of the closure strip. Thickening the closure strip in the areas intended to be welded to other bag materials provides more resin available for flow and bonding during welding. In addition, the greater closure strip mass absorbs more heat and helps to keep the inside surfaces of the closure strip base from being welded together. Thicker materials are also less sensitive to fluctuations in welding conditions, enabling more consistent bonding.

Fig. 17 shows a closure strip 426 at the upper end of a bag 428, having a band 430 of molded hook fastener elements extending from its outer surface and exposed for engaging loop fibers. The closure strip may include a grasping rib 132 as shown, and be configured to tear above band 430, such that the outer hooks remain on the opened bag. Alternatively, the closure strip may be configured to tear between band 430 and the top edge of the bag film, in which case the grasping rib may be unnecessary. The hooks of band 430 are useful, for instance, for hanging bag 428 from a display rack covered with loop material. For stringing multiple bags together, a mating band of loops (not shown) may be provided elsewhere on the outer surface of the bag, such that band 430 of each bag engages the exposed loop band of an adjacent bag of the string. Fig. 17 also illustrates an example of the weld-insulating loop material arrangement discussed below with respect to Figs. 18 and 19.

For some applications, the bag closure is welded between two separate film sheets to form a bag. Fig. 18 shows one such bag closure 462 welded to bag side sheets 464a and 464b, forming what we call an "inverted" closure. The side sheets of the bag extend beyond the closure strip and are themselves welded together to form the upper edge 466 of the bag. After the closure strip has been bonded to the bag sides, and the side edges of the bag sealed (not shown) the bag is filled from its other end, in the direction of arrow "J", which is then sealed to close the bag. To initially open the bag, edge 466 is pulled, tearing the bag side sheets along perforations 468. Next, the closure strip is forced open and the closure strip web is pulled in two along a tear groove 470 at the closure strip fold. To reclose the bag, the loop and hook bands 104 and 106 of the closure strip are simply pressed together.

The welding pattern shown in Fig. 18 provides the anti-peel advantages discussed above, as the inner edge of the loop side of the closure strip remains unbonded to bag side sheet 464b. One method of forming such a weld pattern is shown in Fig. 19, in which closure strip 462 is simultaneously welded to both bag side sheets 464a and 464b by heated jaws 472 and 474, respectively. Advantageously, loop material 104 is arranged on the folded closure strip to overlap both inner and outer closure strip weld zones, inhibiting any permanent welding together of the sides of the closure strip. For applications in which a small amount of bonding between the inner faces of the closure strip is acceptable (or desirable), a chilled jaw 476 against the loop side of the bag adjacent the inner weld zone prevents any undesirable bonding of the inner edge of the loop side of the closure to bag side sheet 464b.

As an alternative to applying the closure strip to the bag film as the bag film is formed into bags, the closure strip may be pre-applied to the bag film, and both spooled together into rolls. Such configurations are particularly useful in the subsequent formation of bags on standard bag-making machines not equipped for the application of closure strips. For example, Figs. 20A through 20C show spooled or rolled film products consisting of a continuous sheet of thin plastic film permanently bonded to one or more continuous lengths of closure products. In Fig. 20A, closure strip 318 is centered upon the bag film 254, such as for forming bags with the process illustrated in Fig. 10. In Fig. 20B, closure strip 444 is sealed along one edge of bag film 446 to form rolled product 482. In Fig. 20C, separate lengths of hook and loop products 484 and 486, respectively, are bonded to opposite edges of film 488 to form rolled product 490, which may be run through standard form/fill processes to incorporate resealable closures into longitudinal fin seals.

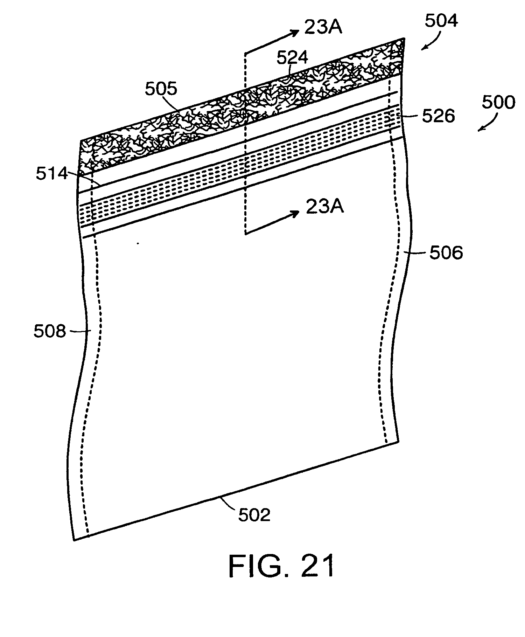

Referring to Fig. 21, bag 500 consists of a piece of polyethylene bag material folded once to form the bottom edge 502 of the bag, joined to a closure 504 to form the upper edge 505 of the bag, and permanently sealed along the remaining two sides 506 and 508 by welding the material of the front face of the bag to the material of the back face of the bag. Although illustrated as a flat bag, bag 500 may be constructed in other forms, such as a pouch with a lower pleated end for standing the pouch upright on its lower edge.

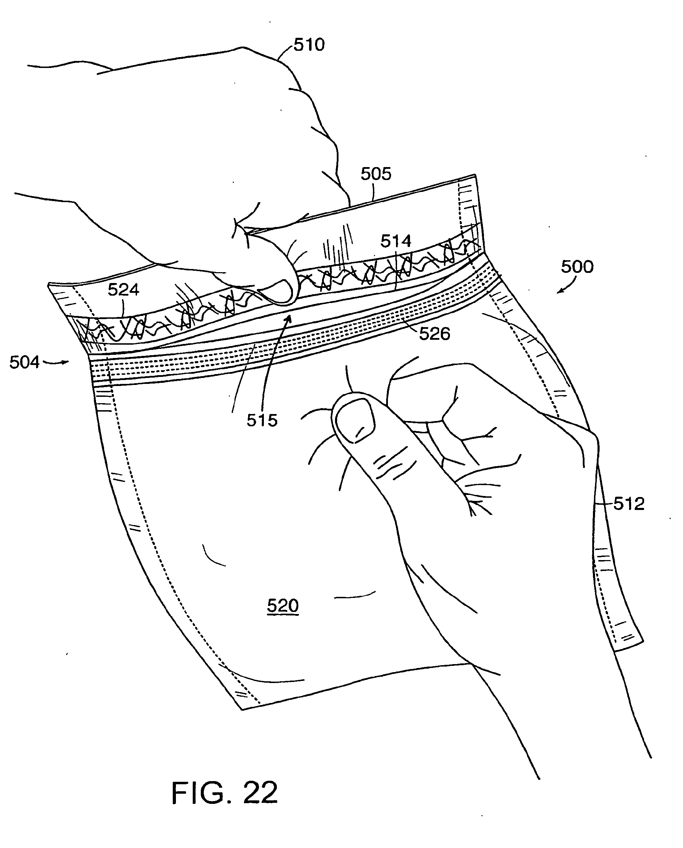

Referring to Fig. 22, to initially open the sealed bag, the upper edge 502 is grasped in one hand 510 and the front face of the bag is grasped in the other hand 512, on either side of a frangible channel 514 extending along closure 504. By only grasping or pinching the front face of the bag with hand 512, and not the back face of the bag, pulling the front face of the bag away from the upper edge places a high tensile load across channel 514, propagating a tear along channel 514 that creates an opening 515 into the bag.

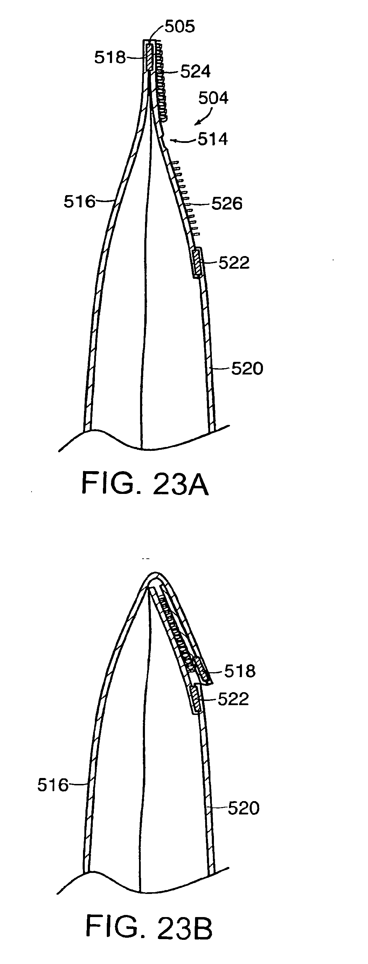

As shown in Fig. 23A, the bag material of the back side 516 of the bag is welded to the back (i.e., non-fastening) side of the reclosable closure 504 at 518. The bag material of the front side 520 of the bag is welded to the closure along an edge region 522 of the front (i.e., fastening) side of the closure 504. With the closure so attached to the bag material, and sealed along the sides of the bag (see Fig. 21), the closure provides an airtight, liquid-tight seal at one end of the bag.

The front face of closure 504 carries a strip 524 of fibrous loops, in non-woven form and partially embedded within the base resin of the closure, and a strip 526 of hookCshaped fastener elements molded out of resin of the base in rows extending along the length of the closure. After being initially opened by pulling apart the closure along groove 514, the bag may be reclosed by folding its upper edge about the opening created by tearing the closure, releasably engaging the strip 524 of loops with the strip 526 of hooks (Fig. 23B).

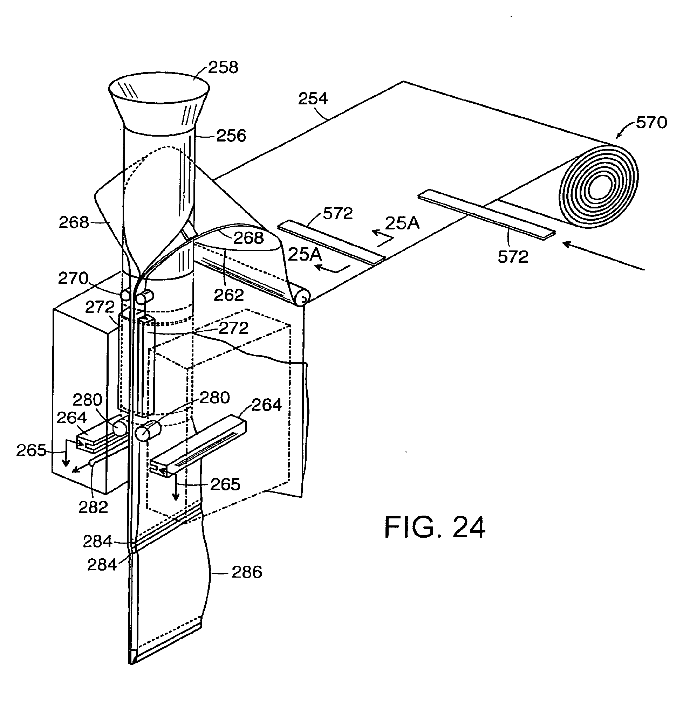

Referring to Fig. 24, another bag-making process features applying the closure strip in discrete lengths across the bag film (i.e., transversely), instead of longitudinally as earlier described. Bag film 254 is unspooled from a roll 570 and onto filling tube 256 over guide forms 262, as described above with respect to Fig. 5. However, in this case individual lengths 572 of closure strip are advanced across the bag film and permanently attached to the film, such as by thermal welding, at bag-length intervals. Preferably, the attachment of the closure strips occurs while the bag film is paused between film advancements, such as while a bag at the lower end of the tube is being sealed and severed. In this manner, inclusion of the closure strips requires very little modification in the bag-making apparatus. As an alternative to attaching the closure strips 572 to the bag film 254 as it is unrolled into the bag-making apparatus, roll 570 may be provided with the closure strips pre-applied at proper intervals.

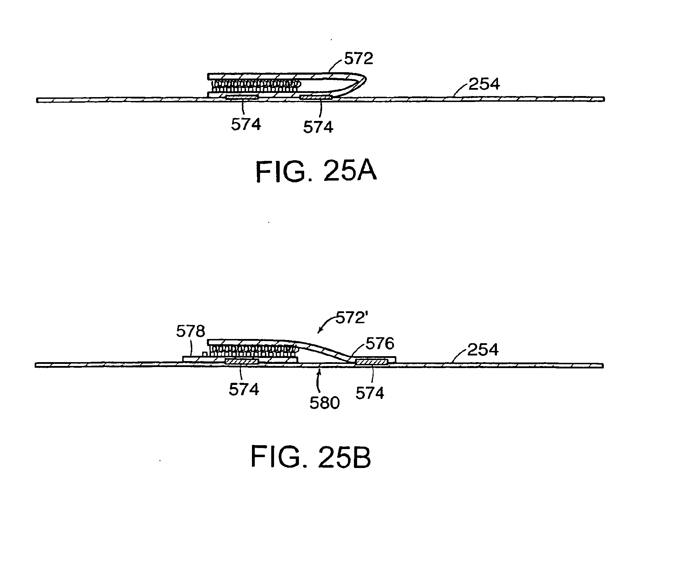

Referring also to Fig. 25A, the closure strip 572 is in one example folded over upon itself as attached to the bag film 254, with the bands of hooks and loops engaged to hold the closure in its folded condition. One side of the closure strip is welded to the bag film in areas 574, while the other side of the closure strip is left unattached until welded to an opposing surface of the bag film below the filling tube (e.g., by sealing bars 264). Thus, closure strip 572 is positioned at one end of the final bag, with its fold either directed outward or inward as desired. The sides of the bag may be joined to form the adjacent end edge of the bag to form an additional end seal. If necessary to hold the closure strip in its folded condition as the bag film is advanced onto the filling tube, the ends of the closure strip may be tacked together.

An alternative closure strip configuration is shown in Fig. 25B. In this case, the closure strip 572' is supplied as two separate fastener strips - a loop strip 576 and a hook strip 578 - that are engaged to each other along their length. Both fastener strips are permanently attached to bag film 254 along weld lines 574, on either side of a tear line 580 (e.g., a row of perforations or a continuous score) in bag film 254. Closure strip 572' may be positioned in the final bag at any point along the length of the bag, which is opened by bursting tear line 580 and separating the loop and hook bands of fastener strips 576 and 578. The bag is reclosed by pressing the hook and loop bands back together.

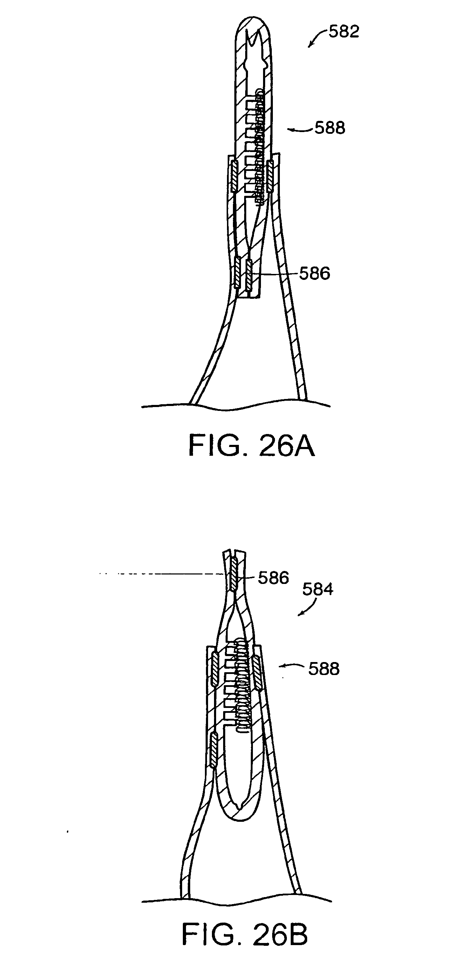

Referring to Figs. 26A and 26B, closure strips 582 and 584 are advantageously provided with peelable seals 586 that act as secondary closure means. Peelable adhesives are well known in the industry, and provide an air and liquid tight seal that is relatively easy to open without tearing the underlying substrate. In some cases, seal 586 is of a material which becomes effectively non-tacky when initially opened. In other cases, seal 586 is of a material which retains its tackiness so as to continue to provide some sealing when the bag is reclosed. In closure strip 582 (Fig. 26A) the peelable seal 586 is located inboard of the primary hook and loop closure 588, so as to protect the loops and fastener elements from contamination from bag contents. In closure strip 582' (Fig. 26B) the peelable seal 586 is located outboard of the primary hook and loop closure 588 and must be opened to access the primary closure. The peel seal may be formed by applying a peelable adhesive, such as a pressure sensitive adhesive, to the front face of the closure strip. In some cases, the adhesive is applied in two discrete regions on the face of the strip, such that the adhesive of the two regions comes together to form the seal. Such peelable seals can provide a higher pantry life (i.e., a longer useful life after the bag has been initially opened) for the bag contents.

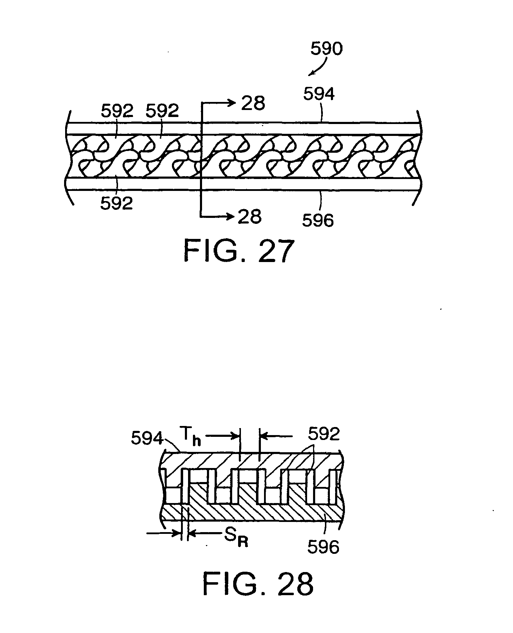

Referring to Fig. 27, a closure strip 590 has mating bands of hook-shaped fastener elements 592. In one band, extending from one side 594 of the closure strip, the fastener elements all face to the left, while from the other side 596 of the closure strip the fastener elements all face to the right. As the bands of fastener elements 592 are pressed further together from the position shown, the tips of the hook-shaped fastener elements interlock to engage the two bands of elements. When pulled apart, the flexible tips extend to clear the tips of the other band of elements and then snap back to their original hook shape. This is one example of what is known in the closure industry as "self-engaging" fasteners - those in which the engaging fastener elements are of a similar structure. Other forms of self-engaging fastener elements include mushrooms, for example, such as the "DUAL-LOCK" fastener product marketed by Minnesota Mining and Manufacturing, Inc. With self-engaging hook-shaped fastening, we prefer to mold the hooks to have a greater thickness "tₕ" than the spacing "sᵣ" between adjacent rows of elements (as shown in Fig. 28), such that the bands cannot be separated by moving one side of the closure strip laterally across the rows of fastener elements of the other side of the closure strip. The CFM-15 and CFM-29 hook shapes marketed by Velcro USA in Manchester, New Hampshire, can be useful for self-engaging fasteners. The hook-shaped fastener elements should be spaced along their rows so as to provide sufficient clearance for the tips of a mating row of hooks to extend between adjacent hooks of the row. The optimal spacing will depend upon the selected hook shape and the strength of engagement desired. With mating arrays of mushroom-type fastener elements, the mushroom density of the opposing arrays should be different to avoid "dead-heading" the mushrooms (i.e., forcing the mushroom heads to deform rather than causing their stems to bend). One array may have, for example, a fastener element density on the order of about 50 to 200 fastener elements per square inch (8 to 31 per square centimeter), while the density of fastener elements in the other array is of the order of about 500 to 2000 per square inch (78 to 310 per square centimeter). Optimal density matches will depend upon the desired engagement and disengagement loads, among other things. Self-engaging bands of fastener elements may be substituted for the loop and hook bands of any of the above-described closure strips to form self-engaging closures for various applications.

Preferably, whether hook and loop bands or self-engaging fastener bands are employed, the mating bands of the closure are advantageously configured to be engaged with a very low engagement force. We measure engagement force by measuring the facial load required between mating halves of a one-inch long length of closure strip to engage the closure. Disengagement peel force is measured as the load required to peel such a one-inch strip of closure apart. The closure can provide an advantageously low engagement force of, for instance, less than about one pound over a lineal inch of the closure, and a low disengagement peel force of less than about two pounds per lineal inch.

Materials other than polyethylene, such as polypropylene, polyester, nylon, and other thermoplastics and their co-polymers, may be employed. For example, laminated or coextruded bag films can have inner surfaces of a material weld-compatible with the material of the closure base, and an outer surface of a material chosen for other properties, such as durability or impermeability.

As evident from the embodiments described above, these closure strips are useful in many packaging applications, for providing a readily-engaged releasable closure that does not require perfect alignment during closing. The closures are useful for packaged food items, such as cookies, candy bars, and even produce, and may be located at one sealed end or along a longitudinal seam of the package. By "bag", we mean to include all packages with flexible sides, including but not limited to standable pouches and flexible cartons.

## Claims

1. A method of forming a bag or package of disposable flexible packaging film (254) or sheet having a surface of predetermined thermoplastic composition, the method comprising:
providing inter-engageable closure strip portions which are either separate strips (576,578) or strip portions of a common member (100),
providing an array (106) of hook elements having crooks or hook elements of mushroom form on at least a first portion of the closure strip portions, the hook elements having stems integrally molded with and extending from a thermoplastic backing substrate,
providing an array (104) of hook-engageable elements such as loops or fibers on the other of the strip portions, the elements of the strip portions capable of forming a releasable closure,
**characterized by**
forming a backing surface (102) on each of the strip portions, the backing surface (102) comprising substantially said predetermined thermoplastic composition of which the surface of the film is formed;
joining the backing substrates (102) of said strip portions to respective portions of the surface of said plastic film or sheet (254) by welding.

2. The method of claim 1 wherein, during welding, the fastener elements (104,106) of the respective strip portions are interengaged and the backings (102) of the strip portions are simultaneously joined to respective portions of the sheet or film (254) by application of energy to the respective sheet or film portions, insulating air pockets provided in the space created by the interengaged elements serving to limit unwanted adhesion or bonding of the closure strip portions to each other.

3. The method of any one of claims 1 through 2 wherein bases of loops or fibers of the second strip portion are encapsulated by and secured by thermoplastic resin of the backing substrate (102) of the respective closure strip portion, the loops or fibers being comprised of resin, such as polyester, that is incompatible with or has a higher melt temperature than the resin, such as polyolefin, of the respective backing substrate, and/or of components of the opposed first strip portion, such that, under conditions of joining, the dissimilarity of the material of the loops or fibers serves to prevent detrimental change to the loops or fibers or detrimental adhesion or bonding of the loops or fibers to the first closure strip portion, preferably, the mass of the hook elements (106) of the first portion being substantially greater than that of the loop elements (104), the thermal mass of the hook elements being sufficient to prevent undue distortion of the hooks during the joining action.

4. The method of any one of claims 1 through 3 performed during vertical form and fill packaging.

5. The method of any one of claims 1 through 3 performed during horizontal form and fill packaging.

6. The method of any one of claims 1 through 3 performed during pouch making.

7. The method of any one of claims 1 through 6 wherein the array (104) of hook-engageable elements comprises a non-woven web of fibers.

8. The method of any one of claims 1 through 7 wherein the backing substrates (102) of said strip portions overlap and are welded to respective edges of said plastic film or sheet (254).

9. The method of any one of claims 1 through 8 wherein the longitudinal edges of the plastic film or sheet (254) are brought together to form a fin seal with the strip portions disposed within the fin seal.

## Patentansprüche

1. Verfahren zum Bilden eines Beutels bzw. Sacks oder einer Verpackung aus einem wegwerfbaren, flexiblen bzw. biegsamen Verpackungsfilm (254) oder - schicht bzw. -folie mit einer Fläche aus einer vorbestimmten thermoplastischen Zusammensetzung, wobei das Verfahren aufweist:
Vorsehen bzw. Bereitstellen von miteinander in Eingriff bringbaren Verschlussstreifenbereichen, welche entweder getrennte Streifen (576, 578) oder Streifenbereiche eines gemeinsamen Elements (100) sind,
Vorsehen bzw. Bereitstellen eines Bereichs bzw. einer Anordnung (106) von Hakenelementen mit Haken oder von Hakenelementen mit einer Pilzform an zumindest einem ersten Bereich der Verschlussstreifenbereiche, wobei die Hakenelemente Stiele bzw. Stängel aufweisen, die mit einem thermoplastischen Rückseite- bzw. Unterlagesubstrat integral geformt sind und sich von diesem thermoplastischen Rückseite- bzw. Unterlagesubstrat erstrecken,
Vorsehen bzw. Bereitstellen eines Bereichs bzw. einer Anordnung (104) von mit Haken in Eingriff bringbaren Elementen, z.B. Schleifen bzw. Schlingen oder Fasern, an dem anderen der Streifenbereiche, wobei die Elemente der Streifenbereiche dazu befähigt sind, einen lösbaren Verschluss zu bilden,
**gekennzeichnet durch**
Bilden einer Rückseite- bzw. Unterlagefläche (102) an jedem der Streifenbereiche, wobei die Rückseite- bzw. Unterlagefläche (102) im wesentlichen die vorbestimmte thermoplastische Zusammensetzung aufweist, aus welcher die Fläche des Films gebildet ist;
Verbinden der Rückseite- bzw. Unterlagesubstrate (102) der Streifenbereiche mit jeweiligen Bereichen der Fläche des Kunststofffilms oder -schicht bzw. - folie (254) **durch** Schweißen.

2. Verfahren nach Anspruch 1, bei dem, während des Schweißens, die Verschlusselemente (104, 106) der jeweiligen Streifenbereiche untereinander in Eingriff gebracht werden und die Rückseiten (102) der Streifenbereiche mit jeweiligen Bereichen der Folie bzw. Films (254) **dadurch** gleichzeitig verbunden werden, dass Energie auf die jeweiligen Folien- oder Filmbereiche aufgebracht wird, wobei isolierende Lufttaschen, die in dem durch die untereinander in Eingriff gebrachten Elemente erzeugten Raum vorgesehen sind, dazu dienen, eine unerwünschte Adhäsion bzw. Anhaftung oder Verbindung der Verschlussstreifenbereiche miteinander zu begrenzen.

3. Verfahren nach einem der Ansprüche 1 bis 2, bei dem Basen bzw. Grundlagen von Schleifen bzw. Schlingen oder Fasern des zweiten Streifenbereichs durch das thermoplastische Harz des Rückseite- bzw. Unterlagesubstrats (102) des jeweiligen Verschlussstreifenbereichs eingekapselt und durch dieses thermoplastische Harz des Rückseite- bzw. Unterlagesubstrats (102) befestigt werden, wobei die Schleifen bzw. Schlingen oder Fasern aus einem Harz, z.B. Polyester, bestehen, welches mit der Schmelztemperatur des Harzes, z.B. Polyolefin, des jeweiligen Rückseite- bzw. Unterlagesubstrats inkompatibel ist oder eine höhere Schmelztemperatur als das Harz, z.B. Polyolefin, des jeweiligen Rückseite- bzw. Unterlagesubstrats aufweist, und/oder von Komponenten des gegenüberliegenden bzw. entgegengesetzten ersten Streifenbereichs, derart, dass, unter Bedingungen des Verbindens, die Verschiedenheit bzw. Unähnlichkeit des Materials der Schleifen bzw. Schlingen oder Fasern dazu dient, eine schädliche bzw. nachteilige Änderung an den Schleifen bzw. Schlingen oder Fasern oder eine schädliche bzw. nachteilige Adhäsion oder Verbindung der Schleifen bzw. Schlingen oder der Fasern mit dem ersten Verschlussstreifenbereich zu verhindern, wobei vorzugsweise die Masse der Hakenelemente (106) des ersten Bereichs wesentlich größer als diejenige der Schlingen- bzw. Schleifenelemente (104) ist, und wobei die thermisch wirksame Masse der Hakenelemente ausreichend ist, um eine unangemessene bzw. übermäßige Verwindung bzw. Verformung der Haken während des Verbindungsvorganges zu verhindern.

4. Verfahren nach einem der Ansprüche 1 bis 3, welches während vertikalem Form- und Füll-Verpacken ausgeführt wird.

5. Verfahren nach einem der Ansprüche 1 bis 3, welches während horizontalem Form- und Füll-Verpacken ausgeführt wird.

6. Verfahren nach einem der Ansprüche 1 bis 3, welches während Beutel- bzw. Taschenherstellung ausgeführt wird.

7. Verfahren nach einem der Ansprüche 1 bis 6, bei dem der Bereich bzw. die Anordnung (104) von mit Haken in Eingriff bringbaren Elementen eine nichtgewebte Bahn bzw. Lage von Fasern aufweist.

8. Verfahren nach einem der Ansprüche 1 bis 7, bei dem die Rückseite- bzw. Unterlagesubstrate (102) der Streifenbereiche jeweilige Ränder des Kunststofffilms oder -folie bzw. -lage (254) überlappen und mit den jeweiligen Rändern des Kunststofffilms oder -folie (254) verschweißt werden.

9. Verfahren nach einem der Ansprüche 1 bis 8, bei dem die Längsränder des Kunststofffilms oder -folie (254) zusammengebracht werden, um einen Rippenverschluss mit den Streifenbereichen zu bilden, die innerhalb des Rippenverschlusses angeordnet sind.

## Revendications

1. Procédé pour former un sac ou un emballage de feuille ou film (254) d'emballage, souple, jetable, comportant une surface de composition thermoplastique prédéterminée, le procédé comprenant :
la fourniture de portions de bandes de fermeture à engagement mutuel qui sont soit des bandes distinctes (576, 578), soit des portions de bandes d'un élément commun (100),
la fourniture d'un ensemble (106) d'éléments formant crochets comportant des crocs ou d'éléments formant crochets en forme de champignon sur au moins une première partie des portions de bandes de fermeture, les éléments formant crochets comportant des tiges moulées d'un seul tenant avec, et s'étendant depuis, un substrat de support thermoplastique,
la fourniture d'un ensemble (104) d'éléments pouvant être engagés par crochets tels que des boucles ou des fibres sur l'autre des portions de bandes, les éléments des portions de bandes pouvant former une fermeture libérable,
**caractérisé par**
la formation d'une surface de support (102) sur chacune des portions de bandes, la surface de support (102) comprenant sensiblement ladite composition thermoplastique prédéterminée dont la surface du film est formée ;
la connexion des substrats de support (102) desdites portions de bandes à des portions respectives de la surface de ladite feuille ou dudit film (254) de plastique par soudage.

2. Procédé selon la revendication 1, dans lequel, durant le soudage, les éléments d'attache (104, 106) des portions de bandes respectives sont engagés mutuellement et les supports (102) des portions de bandes sont simultanément reliés à des portions respectives de la feuille ou du film (254) par application d'énergie sur les portions de feuille ou film respectives, en isolant des poches d'air produites dans l'espace créé par les éléments engagés mutuellement servant à limiter l'adhérence ou la liaison indésirable des portions de bandes de fermeture l'une à l'autre.

3. Procédé selon l'une quelconque des revendications 1 et 2, dans lequel les bases des boucles ou fibres de la deuxième portion de bande sont encapsulées et fixées par la résine thermoplastique du substrat de support (102) de la portion de bande de fermeture respective, les boucles ou fibres étant composées de résine, telle que le polyester, qui est incompatible avec, ou a une température de fusion plus élevée que, la résine, telle que la polyoléfine, du substrat de support respectif, et/ou des composants de la première portion de bande opposée, de manière que, dans des conditions de connexion, la dissemblance du matériau des boucles ou fibres serve à empêcher une modification nuisible des boucles ou fibres ou une adhérence ou liaison nuisible des boucles ou fibres à la première portion de bande de fermeture, de préférence la masse des éléments formant crochets (106) de la première portion étant sensiblement supérieure à celle des éléments formant boucles (104), la masse thermique des éléments formant crochets étant suffisante pour empêcher une déformation exagérée des crochets durant l'action de connexion.

4. Procédé selon l'une quelconque des revendications 1 à 3, mis en oeuvre durant l'emballage vertical avec formage et remplissage.

5. Procédé selon l'une quelconque des revendications 1 à 3, mis en oeuvre durant l'emballage horizontal avec formage et remplissage.

6. Procédé selon l'une quelconque des revendications 1 à 3, mis en oeuvre durant la fabrication du sachet.

7. Procédé selon l'une quelconque des revendications 1 à 6, dans lequel l'ensemble (104) d'éléments pouvant être engagés par crochets comprend une bande non tissée de fibres.

8. Procédé selon l'une quelconque des revendications 1 à 7, dans lequel les substrats de support (102) desdites portions de bandes se chevauchent et sont soudés à des bords respectifs de ladite feuille ou dudit film (254) de plastique.

9. Procédé selon l'une quelconque des revendications 1 à 8, dans lequel les bords longitudinaux de la feuille ou du film (254) de plastique sont rapprochés pour former un joint en ailette avec les portions de bandes disposées au sein du joint en ailette.
